# EUROPEAN PATENT APPLICATION

(11) **EP 2 117 183 A1**
(43) Date of publication of application: **11.11.2009**
(21) Application number: 08305160.7
(22) Date of filing: 09.05.2008
(51) Int. Cl.: H04L 12/56

(54) **Method and apparatus for providing quality of service control for a stream comprising data of different importance**

(71) Applicant: Thomson Licensing, Inc., 92100 Boulogne-Billancourt (FR)
(72) Inventor: Ma, Xiaojun, BEIJING 100085 (CN); Li, Jun, INDIANAPOLIS, IN 46207 (US); Liu, Hang, Yardley, PA 19067 (US)
(74) Representative: Ruellan-Lemonnier, Brigitte

(57) **Abstract**

It provides a method for providing quality of service control for a stream comprising data of different importance. A device receives data of different importance from the stream, and generates quality of service control information for each frame based on the importance of data. The quality of service control information is used to differentiate the frame so as to provide an intra-flow data differentiation.

## Description

### Technical Field

The present invention relates to data communication, and more particularly, relates to quality of service (Qos) control.

### Background

A multimedia stream may consist of different layers (or types) of data, wherein one layer of data may be more important than others. The stream is rendered with the highest quality based on data of all layers, and rendered with a comparatively lower quality based on data of a subset of layers.

One typical example is scalable video coding (SVC) technology. SVC encodes a video stream into one base layer plus at least one enhance layer. Depending on the application requirements or network conditions, the receiving device may decode the data of the base layer to obtain the lowest quality of the video, or decode data of all layers to get the highest quality of the video.

Moreover, there are many other technologies other than SVC providing multiple data layers (or types) for a single stream. A generic multi-layer stream can be used to convey source coding data with different importance. The diff-serv (differentiated service) QoS (quality of service) control technology is deployed in the network transport layer to differentiate different types of media data, such as video, audio, text etc, by assigning different priorities to packets of different types of media data. Thus, media data in the same stream flow belonging to a certain media type has the same priority. However, media data in the same stream flow may have different importance. For example, this may be the case for base layer data and enhance layer data in SVC, I, P and B frames in MPEG-2 or H.264, and etc. Therefore, it is desirable to provide an intra-flow data differentiation so as to further differentiate the media data in one stream to provide Qos control.

### SUMMARY

According to a general aspect of present invention, it provides a method for providing quality of service control for a stream comprising data of different importance, it comprises the following steps, receiving data of said stream; and then generating data frames, each data frame comprises information uniquely identifying the stream and quality of service control information based on the received data and predefined mapping criteria such that data of different importance from said stream conveyed in the data frames can be differentiated.

According to a general aspect of present invention, it provides an apparatus for use in a communication network. The apparatus comprises an input module (901), an output module (903) and a converting module (902). The input module (901) is configured to receive a data stream comprising data of different levels of importance. The output module (903) is configured to output data. And the converting module (902) is configured to convert data of said stream to data frames comprising quality of service control information as a function of data importance level such that it can provide different quality of service for data of different importance in said stream.

According to a general aspect of present invention, it provides a data structure for providing quality of service control for a stream. The data structure comprises data of different importance. Furthermore, the data structure comprises information uniquely identifying the stream to which said data structure belongs to and quality of service control information configured to differentiate frames conveying data of different importance in one stream.

According to a general aspect of present invention, due to each frame conveying data of different importance from a stream includes qualify of service control information, it can provide an intra-flow data differentiation.

It is to be understood that both the foregoing general description and the following detailed description of the present invention are explanatory and exemplary only.

### BRIEF DESCRIPTION OF THE DRAWINGS

The accompanying drawings, which are included to provide a further understanding of the invention and are incorporated in and constitute a part of this application, illustrate embodiment(s) of the invention together with the description which serves to explain the principle of the invention. Therefore, the invention is not limited to the embodiments. In the drawings:

Fig. 1A, 1B and 1C are block diagrams illustrating the mapping unit (MU) deployed in an independent device, in an access point (AP) and in a mobile station (MS) separately according to an embodiment of the present invention.

Fig. 2 is a flowchart of a method for providing intra-flow differentiated service for a stream comprising data of different importance according to the embodiment of the present invention.

Fig. 3 is a diagram of the frame definition with Qos Control Field override according to the embodiment of the present invention.

Fig. 4 is a diagram of a first data structure definition of the Qos Control Field as shown in Fig. 3 according to the embodiment of the present invention.

Fig. 5 is a diagram of a second data structure definition of the Qos Control Field according to the embodiment of the present invention.

Fig. 6 is a diagram of the definition of the TSPEC element and Info Field according to the embodiment of the present invention.

Fig. 7 is a diagram of a data structure definition of the frame and VTS Control Field according to the embodiment of the present invention.

Fig. 8 is a diagram of the data structure definition of the Intra-flow/Intra-AC Field according to the embodiment of the present invention.

Fig. 9 is a block diagram of the mapping unit according to the embodiment of the present invention.

### DETAILED DESCRIPTION

The embodiment of the present invention will now be described in detail in conjunction with the drawings. In the following description, some detailed descriptions of known functions and configurations may be omitted for clarity and conciseness.

The embodiment is elaborated in a wireless communication environment. As an example, the document IEEE Std 802.11e-2005 Amendment 8: Medium Access Control, available in IEEE website, defines certain aspects of this wireless environment. In order to support the Qos, enhanced distributed channel access (EDCA) and HCF (Hybrid Coordination Function) controlled channel access (HCCA) are specified in the 802.lle standard based on the distributed coordination function (DCF) and point coordination function (PCF). Herein, the EDCA is a prioritized carrier sense multiple access with collision avoidance (CSMA/CA) access mechanism that is used by the Qos stations in a Qos basic service set (BSS). Moreover, this access mechanism is also used by the Qos access point (AP) and operates concurrently with HCCA. The embodiment described below is placed in the framework of such environment along with the changes indicated in the description. However, the invention should not be limited to the described embodiment. Furthermore, a flow has literally same meaning as a stream in the below description.

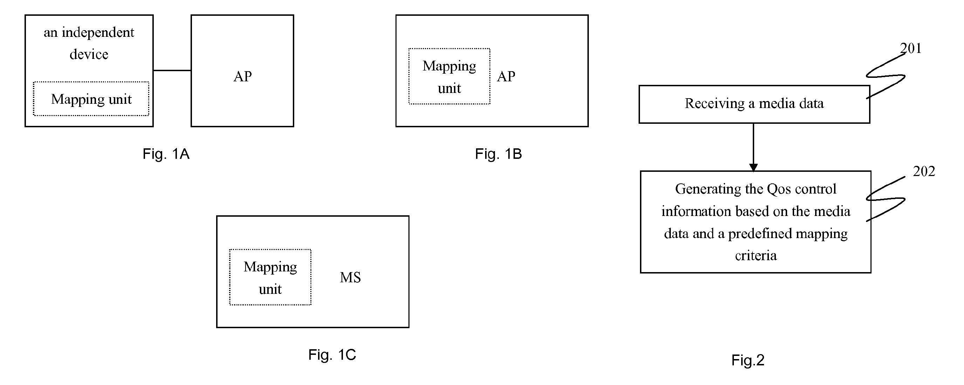

According to the embodiment of the present invention, the MAC data frame may be sent from a mobile station (MS) and forwarded to other mobile stations or a distributed system through the access point (AP), or derived from an outside distributed system and distributed to the MS through the AP. Therefore, a mapping unit (MU) is needed to generate the MAC header for each data frame based on the importance of data to be encoded into the body of the frame. The MU may reside in the AP, the MS, or an independent device outside of the AP. Fig. 1A, 1B, and 1C show the MU deployed in an independent device outside of the AP, the MU deployed in the AP and the MU deployed in the MS separately.

Under the circumstance as shown in Fig. 1A, when a data packet is transmitted from a network equipment to an AP, the MU in the independent device shall map the data packet to be transmitted from the independent device to the AP, i.e. generate the intra-flow diff-serv information to be contained in the MAC frame header based on predefined criteria, e.g., media layers (base layer or enhance layer) that the media packet belongs to, or the importance of the media packet within the stream flow. Other criteria may be taken into account, such as source IP address / port, destination address / port, or DSCP (differentiated service code point), etc.

Under the circumstance as shown in Fig. 1B, before transferring the MAC data frame to the AP for processing, the MU shall generate the intra-flow diff-serv information to be contained in the MAC frame header according to predetermined criteria.

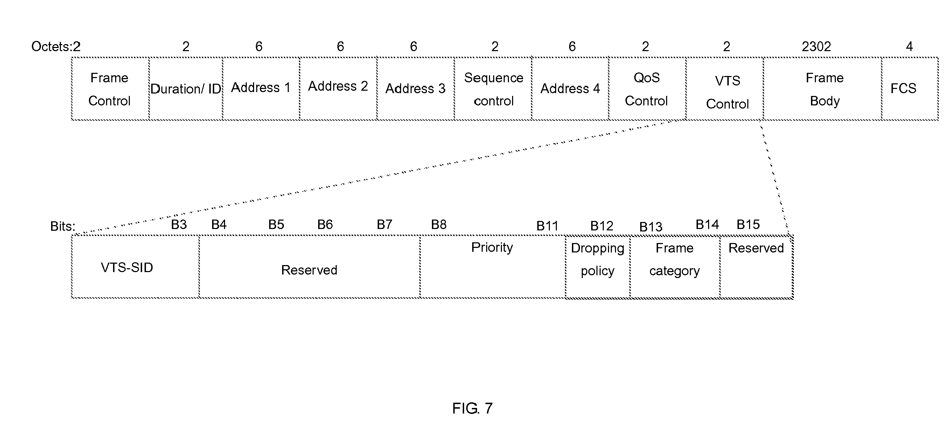

Under the circumstance as shown in Fig. 7C, before sending out a data frame, the MS shall generate the intra-flow diff-serv information to be contained in the MAC frame header based on the predetermined criteria.

Therefore, the AP and the mobile station can offer differentiated services to differentiate MAC data frames based on the intra-flow diff-serv information contained in the MAC frame header, e.g., discarding packets when there is insufficient channel capacity based on the dropping policy which is encapsulated in the MAC frame header.

Fig. 2 illustrates a method for providing intra-flow differentiated service for a stream comprising data of different importance according to the embodiment of the present invention.

In step 201, the MU receives a media data associated with a stream flow comprising data of different importance, the media data can be a IP data packet, a MAC data frame or data in other form.

In step 202, the MU generates the Qos control information to be contained in the MAC frame header based on the predefined mapping criteria and mapping related information derived from the received media data. As an example, the mapping related information comprises information relating to I, B and P frames in MPEG-2 or H.264, base layer or enhance layer in SVC if the received media data is in packet form. And the mapping related information may comprise information relating to frame category indicating whether the received frame is a channel coding frame or a media data frame if the received media data is in frame form. In case that channel condition is good, the device can choose not to forward the channel coding frame indicated by the frame category field so as to save the bandwidth without reducing the Qos. The predefined mapping criteria can be a table stored in a device comprising the fields relating to the above mentioned mapping related information, such as layer type field etc... The predefined mapping criteria may further comprise a priority field, a dropping policy field and a frame category field. The MU first derives mapping related information from the received media data, and then it uses the mapping related information as an index to determine the priority setting, frame dropping setting etc... in the predefined mapping criteria, at last the MU generates the Qos control information based on the information relating to priority setting, frame dropping setting etc... determined from the predefined mapping criteria. Due to the Qos control information in a frame comprises dropping a policy field for determining the dropping policy, the less important frames will be dropped accordingly in a burst or random manner if there is insufficient channel capacity.

According to a variant of the present embodiment, the mapping related information and predefined mapping criteria comprises the stream identifying information that could be used to uniquely identify a stream. As an example, the stream identifying information is a stream identifier conveyed in the media data or a combination of source address and destination address.

According to a variant of the present embodiment, the Qos control information only includes the information relating to the priority of the frame, which is sufficient to provide Qos control in the MAC layer. However, in some circumstance, the Qos control information may include more, such as information relating to source port, destination port, and etc, which provides a finer control of the frame.

According to a variant of the present embodiment, the method is not limited to providing a differentiated service in the MAC layer for a stream comprising data of different importance. It can also provide a differentiated service in MAC layer for all data requiring differentiated service as long as the Qos control information generated in the course of data conversion is conveyed in the converted frame. The device receiving such a converted frame can derive the Qos control information so as to realize differentiated service in the MAC layer.

In order to support the intra-flow data differentiation (also called 'intra-flow diff-serv') and still be compatible with the EDCA, the paragraphs below describe four examples of primitives definitions of the intra-flow diff-serv in the MAC frame that can be used in the above-mentioned method according to the embodiment of the present invention.

Example 1:

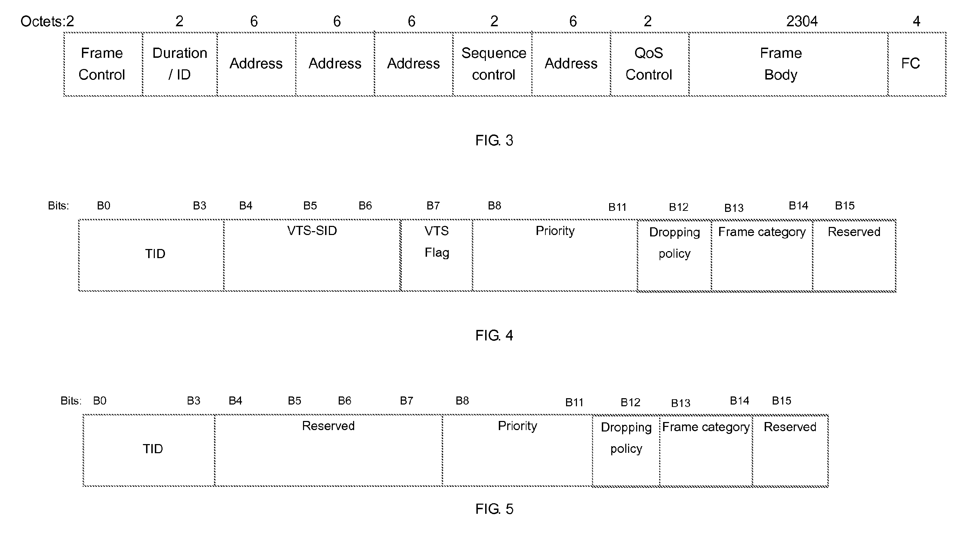

Fig. 3 illustrates the frame definition in the 802.11e standard, where the Qos Control Field is overridden as shown in Fig. 4. The subfields in the overridden Qos Control Field are defined as follow:

TID (Traffic identifier) Field takes up 4 bits from B0 to B3, and its value ranges from 0 to 7 in order to have forward compatibility with EDCA priority 0-7;

VTS-SID (video transport stream-stream identifier) Field taking up 3 bits from B4 to B6 is used to indicate the stream ID;

VTS Flag Field taking up 1 bit of B7 is used to indicate whether intra-flow/intra-Access Category (AC) information is included. The intra-flow/intra-AC information is included if its value is equal to 1. This field is for the purpose of backward compatibility with EDCA, whereas in the legacy the B7 is set to 0. Herein, AC is a label for the common set of EDCA parameters used by a Qos station to contend for the channel in order to transmit MAC service data units (MSDU) with certain priorities;

Priority Field taking up 4 bits from B8 to B11 is used to indicate the priority of the frame. Normally, the Priority Field is generated based on the importance of the data to be conveyed in the frame and the predefined priority mapping table;

Dropping policy Field taking up 1 bit of B12 is used to indicate the frame dropping policy. As an example, the dropping policy includes burst frame dropping and random frame dropping;

Frame Category Field taking up 2 bits from B13 to B14 is used to indicate the category of the frame, such as video/audio frame, FEC frame or control frame;

The B15 is reserved for later use.

Example 2:

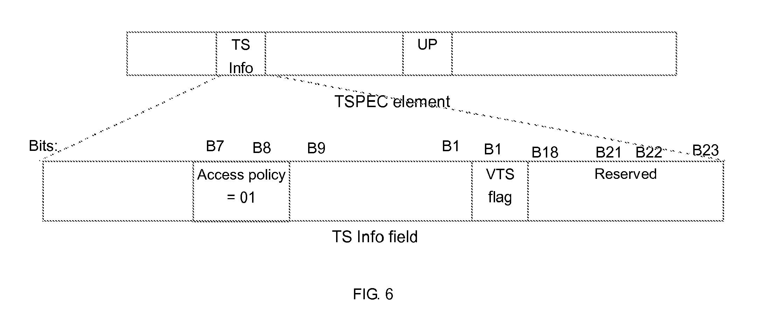

The intra-flow data is differentiated by another data structure definition of Qos Control Field plus TSPEC (Traffic specification) control frame. As can be seen from the data structure definition of Qos Control Field shown in Fig. 5, subfields of TID, Priority, Dropping Policy, Frame category function similar as described above except for the TID Subfield. Herein, the value of TID Subfield is ranged from 8 to 15 instead of 0 to 7 for the compatibility purpose. Fig.6 shows the TSPEC element and its TS Info Field. UP Field in the TSPEC frame is set a value corresponding to EDCA priority in order for forward compatibility with the EDCA. VTS Flag Subfield in TS Info Field taking up 1 bit of B17 is used to indicate VTS flag in order for backward compatibility.

Example 3:

The intra-flow data is differentiated by adding a new VTS Control Field that occupies 2 bytes of the original Frame Body Field. As shown in Fig. 7, the VTS Control Field taking up 16 bits contains VTS-SID Subfield, Priority Subfield, Dropping Policy Subfield and Frame Category Subfield. These subfields almost function the same as described above. Moreover, the B7 of the Qos Control Field is set as the VTS Flag Subfield that is used to indicate the presence of the VTS Control Field.

Example 4:

The intra-flow data can be differentiated by taking use of the definition Qos control field. The below shows a table indicating the definition of subfields in the Qos Control Field.

**Table 1: definition of subfields in the Qos Control Field**

| **Applicable frame (sub) types** | **Bits 0-3** | **Bit 4** | **Bits 5-6** | Bit 7 | **Bits 8-15** |
|---|---|---|---|---|---|
| QoS (+)CF-Poll frames sent by HC | TID | EOSP | Ack Policy | Reserved | TXOP Limit |
| QoS Data, QoS Null, and QoS Data+CF-Ack frames sent by HC | TID | EOSP | Ack Policy | *0* | QAP PS Buffer State |
| | TID | EOSP | Ack Pol icy | *1* | *Intra-flow*/*Intra-AC information* |
| QoS data frames sent by non-AP QSTAs (Qos Station) | TID | 0 | Ack Policy | 0 | TXOP Duration Requested |
| | TID | 1 | Ack Policy | 0 | Queue Size |
| | TID | 0 | Ack Pol icy | 1 | *Intra-flow*/*Intra-AC information* |
| | TID | 1 | Ack Pol icy | 1 | *Intra-flow*/*Intra-AC information* |

The TID Subfield (4 bits) is used to indicate the TC (Traffic category) or TS (Traffic stream) to which the corresponding MSDU, or fragment thereof in the Frame Body Field belongs;

The EOSP (End of service period) Subfield (1 bit) is used by the HC (Hybrid coordinator)to indicate the end of the current service period (SP);

The Ack Policy Subfield (2 bits) is used to indicate the acknowledgement policy, wherein 00=normal Ack, 10=No Ack, 01= No explicit acknowledgment, and 11= Block Ack;

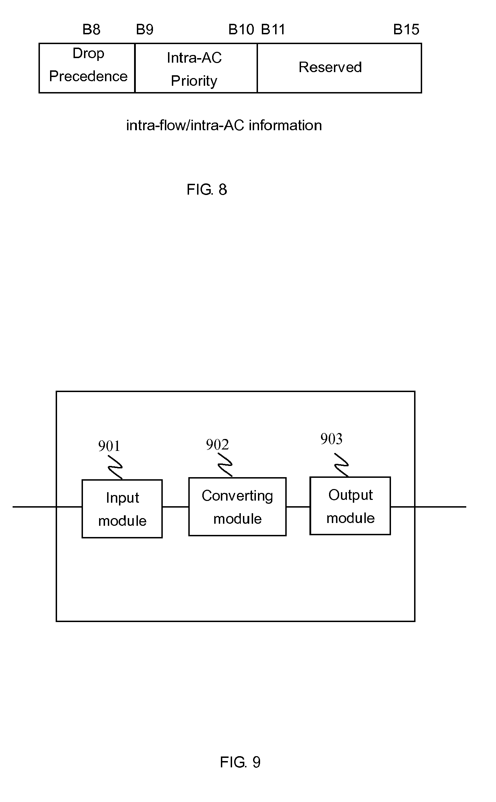

Bit 7 of the Qos Control Filed is used to indicate whether intra-flow/ intra-Access Category (AC) information is included. When the Bit 7 is not set, other information, such as Buffer State, Queue Size and etc., is contained in bits 8-15. When it is set, Intra-flow/Intra-AC Field is contained in bits 8-15. Fig. 8 illustrates the definition of the Intra-flow/Intra-AC Field. Where the Drop Precedence Subfield (1 bit) indicates the precedence based on which this frame is discarded for graceful degradation when there is insufficient channel capacity. Intra-AC Priority Subfield (2 bits) is used to indicate the priority of the frame in the stream flow.

In this example, it is also possible to define the SID by using the reserved bits (B11 to B15). However, if the SID is not included, the stream can also be identified by the combination of the source address and the destination address.

It can be seen from above four examples of primitives of the intra-flow diff-serv in the MAC frame that not all fields/subfields are necessary for applying the method, such as VTS Flag Subfield. Normally, the primitives generally comprise SID, Frame Intra-flow Type (IFT) Field. The SID is used to uniquely identify a stream flow in the MAC layer. However, the SID field is not always explicitly present in the MAC frame. In that case, the combination of the source address and destination address can be used to uniquely identify a stream flow as an alternative. The IFT Field is used to differentiate one frame from another so as to enabling Qos control in a stream flow. Generally, the IFT Field includes the Priority Subfield indicating the priority of the frame so as to realize intra-flow priority. The IFT Field may further comprise Dropping Precedence Subfield indicating the precedence of the frame to be discarded, Dropping Policy Subfield indicating the dropping policy of the frame, and Frame Category Subfield indicating the frame category. Sometimes the Frame Category Subfield is necessary because the channel coding frame may be treated specially from source media frame. As an example, the channel coding frames, such as Forward Error Correction (FEC) and Automatic Repeat Request (ARQ), are normally treated less important than other frames that bear the media data.

Fig. 9 illustrates the block diagram of the mapping unit according to the present embodiment. The mapping unit comprises an input module 901, an output module 903 and a converting module 902. The input module is used to receive the input, such as IP data packet, MAC data frame or data in other form. The output module is used to output the data result converted by the converting module 902. The converting module is used to convert the inputted data from the input module 902 to a data frame comprising Qos control information based on the inputted data and predefined mapping criteria. The Qos control information at least comprises a priority field indicating the priority of the frame, furthermore, it may comprise a Dropping Policy field indicating the frame dropping policy and frame category field indicating the category of the frame.

According to a variant of the present embodiment, the AP comprises a frame dropping module that is used to drop the frame according to the dropping policy indicated in the dropping policy field.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application and are within the scope of the invention.

## Claims

1. An apparatus for use in a communication network comprising
- an input module (901) configured to receive a data stream comprising data of different levels of importance;
- and an output module (903) configured to output data, **characterized by** further comprising
- a converting module (902) configured to convert data of said stream to data frames comprising quality of service control information as a function of data importance level such that it can provide different quality of service for data of different importance in said stream.

2. The apparatus according to the claim 1, **characterized in that** said quality of service control information is generated based on the data of said stream and predefined mapping criteria.

3. The apparatus according to the claim 1, **characterized in that** said quality of service control information comprises a field indicating a dropping policy for the data frame.

4. Apparatus according to claim 3, further comprising a frame dropping module configured to drop a data frame according to the dropping policy indicated in said quality of service control information.

5. A method for providing quality of service control for a stream comprising data of different importance,
**characterized by** the steps of receiving data of said stream;
generating data frames, each data frame comprising information uniquely identifying the stream and quality of service control information based on the received data and predefined mapping criteria such that data of different importance from said stream conveyed in the data frames can be differentiated.

6. The method according to claim 5, **characterized in that** the quality of service control information is generated from an entry of the predefined mapping criteria, wherein the entry is located based on received data of said stream.

7. The method according to claim 5, **characterized in that** said quality of service control information comprises a priority field used to indicate the priority of said data frame.

8. The method according to claim 7, **characterized in that** said quality of service control information further comprises a frame category field used to indicate the category of said data frame.

9. The method according to claim 7, **characterized in that** said quality of service control information further comprises a field indicating the dropping policy for said data frame.

10. The method according to claim 9, **characterized by** further comprising processing said data frame based on the field indicating the dropping policy.

11. The method according to claim 5, **characterized in that** said information uniquely identifying the stream is the Stream ID.

12. A data structure for providing quality of service control for a stream comprising data of different importance, **characterized in that** said data structure comprises information uniquely identifying the stream to which said data structure belongs to and quality of service control information configured to differentiate frames conveying data of different importance in one stream.

13. The data structure according to claim 12, **characterized in that** said quality of service control information comprises at least one among the following:
a priority field indicative of the priority of the frame;
a frame category field indicative of the category of the frame;
a field indicative of the dropping policy of the frame.
